# EUROPÄISCHE PATENTSCHRIFT

(11) **EP 2 746 157 B1**
(45) Veröffentlichungstag und Bekanntmachung des Hinweises auf die Patenterteilung: **25.07.2018**
(21) Anmeldenummer: 13190603.4
(22) Anmeldetag: 29.10.2013
(51) Int. Cl.: B60N 3/00, B64D 11/06

(54) **Flugzeugsitzträgervorrichtung**
Aircraft seat support device
Dispositif de support de siège d'avion

(30) Priorität: 21.12.2012 DE 102012112943
(43) Veröffentlichungstag der Anmeldung: 25.06.2014
(73) Patentinhaber: Recaro Aircraft Seating GmbH & Co. KG, 74523 Schwäbisch Hall (DE)
(72) Erfinder: Schürg, Christoph, 74523 Schwäbisch Hall (DE); Schreyer, Tim, 74523 Schwäbisch Hall (DE)
(74) Vertreter: Daub, Thomas

(56) Entgegenhaltungen:
- WO-A1-2013/131714
- DE-A1-102008 012 831
- DE-A1-102009 052 684
- DE-U1-202006 003 018
- US-A1- 2011 316 311
- US-A1- 2012 091 764
- US-A1- 2012 120 626

## Beschreibung

### Stand der Technik

Die Erfindung betrifft eine Flugzeugsitzträgervorrichtung nach dem Oberbegriff des Anspruchs 1.

Es ist z.B. aus der dem Oberbegriff entsprechenden US 2011/0316311 A1 bereits eine Flugzeugsitzträgervorrichtung, mit zumindest einer Flugzeugsitzträgereinheit, die dazu vorgesehen ist, in zumindest einem montierten Zustand an zumindest einer Rückenlehneneinheit einer Sitzeinheit angeordnet zu sein, vorgeschlagen worden. Die Flugzeugsitzträgereinheit ist als ein einziges, zusammenhängendes Stück ausgebildet.

Die Aufgabe der Erfindung besteht insbesondere darin, eine gattungsgemäße Vorrichtung mit verbesserten Eigenschaften hinsichtlich einer Flexibilität bereitzustellen. Die Aufgabe wird erfindungsgemäß durch die kennzeichnenden Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzträgervorrichtung, mit zumindest einer Flugzeugsitzträgereinheit, die dazu vorgesehen ist, in zumindest einem montierten Zustand an zumindest einer Rückenlehneneinheit einer Sitzeinheit angeordnet zu sein.

Es wird vorgeschlagen, dass die Flugzeugsitzträgereinheit zumindest eine Grundeinheit und zumindest eine von der Grundeinheit getrennt ausgebildete Abdeckeinheit aufweist, die dazu vorgesehen ist, in dem montierten Zustand mit der Grundeinheit verbunden zu sein. Beispielsweise ist denkbar, dass die Flugzeugsitzträgereinheit zumindest teilweise einstückig mit der Rückenlehneneinheit ausgebildet ist, wobei zumindest eine Einheit, insbesondere die Grundeinheit der Flugzeugsitzträgervorrichtung als die Rückenlehneneinheit ausgebildet ist. Insbesondere ist die Flugzeugsitzträgereinheit als eine getrennt von der Rückenlehneneinheit ausgebildete Einheit ausgebildet. Vorzugsweise ist die Flugzeugsitzträgereinheit dazu vorgesehen, in dem montierten Zustand an der Rückenlehneneinheit der Sitzeinheit montiert zu sein. Unter einer "Flugzeugsitzträgereinheit" soll insbesondere eine Einheit verstanden werden, die in dem montierten Zustand als eine Trägereinheit zumindest einer weiteren Komponente ausgebildet ist. Unter einer "Trägereinheit" soll insbesondere eine Einheit verstanden werden, die in dem montierten Zustand dazu vorgesehen ist, eine Gewichtskraft der weiteren Komponente zumindest teilweise zu tragen. Vorzugsweise ist die Trägereinheit dazu vorgesehen, in dem montierten Zustand auf die Trägereinheit einwirkende Kräfte abzuleiten. Insbesondere weist die Trägereinheit zumindest eine Trägerlängsrichtung auf. Vorzugsweise weist die Trägereinheit zumindest eine Trägerquerrichtung auf. Insbesondere weist die Trägerlängsrichtung einen Betrag größer oder gleich einem Betrag der Trägerquerrichtung auf. Vorzugsweise spannen die Trägerlängsrichtung und die Trägerquerrichtung zumindest eine Trägerebene auf. Insbesondere weist die Trägereinheit zumindest eine Trägertiefenrichtung auf, die zumindest im Wesentlichen senkrecht zu der Trägerlängsrichtung und zumindest im Wesentlichen senkrecht zu der Trägerquerrichtung ausgerichtet ist. Vorzugsweise ist die Trägertiefenrichtung zumindest im Wesentlichen senkrecht zu der Trägerebene ausgerichtet. Insbesondere ist die Trägerebene zumindest im Wesentlichen parallel zu einer von der Rückenlehneneinheit der Sitzeinheit aufgespannten Ebene ausgerichtet. Vorzugsweise weist die Trägereinheit zumindest eine Trägerlängserstreckung auf, die zumindest im Wesentlichen parallel zu der Trägerlängsrichtung ausgerichtet ist. Insbesondere weist die Trägereinheit zumindest eine Trägerquererstreckung auf, die zumindest im Wesentlichen parallel zu der Trägerquerrichtung ausgerichtet ist. Beispielsweise ist die Trägereinheit dazu vorgesehen, in dem montierten Zustand zumindest teilweise eine Gewichtskraft einer Stretchervorrichtung zu tragen und, vorzugsweise in die Rückenlehneneinheit der Sitzeinheit, abzuleiten. Ebenfalls denkbar ist, dass die Trägereinheit als eine Aufstehhilfe für einen in einer bezüglich einer Trägertiefenrichtung hinter der Sitzeinheit angeordneten Sitzeinheit sitzenden Passagier ausgebildet und dazu vorgesehen ist, eine durch den Passagier auf die Trägereinheit einwirkende Kraft zu tragen und abzuleiten. Unter einer "Sitzeinheit" soll insbesondere eine Einheit mit zumindest einer Rückenlehneneinheit, mit zumindest einer Sitzbodeneinheit und mit zumindest einer Aufständereinheit verstanden werden. Insbesondere ist die Rückenlehneneinheit schwenkbar mit der Sitzbodeneinheit verbunden. Alternativ ist denkbar, dass die Rückenlehneneinheit starr mit der Sitzbodeneinheit verbunden ist. Weiterhin ist denkbar, dass die Sitzeinheit eine Armlehneneinheit aufweist, die schwenkbar gelagert und zu einer Auflage eines Arms eines Passagiers vorgesehen ist. Unter einer "Grundeinheit" soll insbesondere eine Einheit verstanden werden, die in dem montierten Zustand zumindest teilweise als eine Trägereinheit ausgebildet ist. Insbesondere ist die Grundeinheit in dem montierten Zustand zusätzlich zu der Ausbildung als Trägereinheit dazu vorgesehen, die Abdeckeinheit zu tragen. Vorzugsweise ist die Grundeinheit in dem montierten Zustand mit der Abdeckeinheit, vorzugsweise lösbar, verbunden. Insbesondere weist die Grundeinheit zumindest eine Anschlusseinheit auf, die zu einem Anschließen der Abdeckeinheit vorgesehen ist. Unter einer "Abdeckeinheit" soll insbesondere eine Einheit verstanden werden, die in dem montierten Zustand mit der Grundeinheit, insbesondere lösbar, verbunden ist. Insbesondere ist die Abdeckeinheit als ein Deckel der Grundeinheit ausgebildet. Vorzugsweise ist die Abdeckeinheit dazu vorgesehen, die Grundeinheit in dem montierten Zustand zumindest teilweise zu bedecken. Unter der Wendung, dass die Abdeckeinheit dazu vorgesehen ist, die Grundeinheit in dem montierten Zustand "zumindest teilweise zu bedecken", soll insbesondere verstanden werden, dass, bei einer zumindest teilweise einstückig mit der Rückenlehneneinheit ausgebildeten Fahrzeugsitzträgereinheit, die Abdeckeinheit in dem montierten Zustand mehr als 5 %, vorzugsweise mehr als 8 % und insbesondere mehr als 10 % einer Oberfläche der Grundeinheit bedeckt. Unter der Wendung, dass die Abdeckeinheit dazu vorgesehen ist, die Grundeinheit in dem montierten Zustand "zumindest teilweise zu bedecken", soll insbesondere verstanden werden, dass, bei einer getrennt von der Rückenlehneneinheit ausgebildeten Flugzeugsitzträgereinheit, die Abdeckeinheit in dem montierten Zustand mehr als 80 %, vorzugsweise mehr als 90 % und insbesondere mehr als 95 % einer Oberfläche der Grundeinheit bedeckt. Unter der Wendung, dass die Abdeckeinheit dazu vorgesehen ist, in dem montierten Zustand mit der Grundeinheit "verbunden" zu sein, soll insbesondere verstanden werden, dass die Abdeckeinheit in dem montierten Zustand die Grundeinheit zumindest teilweise berührt. Unter einer "Aufständereinheit" soll insbesondere eine Einheit verstanden werden, die dazu vorgesehen ist, eine Sitzeinheit, insbesondere eine Sitzeinheit mit einer Sitzbodeneinheit und mit einer Rückenlehneneinheit, auf einem Boden, insbesondere auf einem Boden eines Transportmittels, aufzuständern. Insbesondere ist die Aufständereinheit dazu vorgesehen, Gewichtskräfte der Sitzeinheit und, falls eine Person auf der Sitzeinheit sitzen sollte, Gewichtskräfte der auf der Sitzeinheit sitzenden Person und/oder durch einen Transport bedingte, auf die Person wirkende Beschleunigungskräfte auf den Boden zu übertragen. Unter einem "Transportmittel" soll dabei insbesondere jegliche Art von Verkehrsmittel verstanden werden, das mit Sitzen ausgestattet und dazu vorgesehen ist, Personen zu transportieren. Erfindungsgemäß ist das Transportmittel ein Flugzeug. Unter der Wendung, dass eine Gerade und/oder Ebene "zumindest im Wesentlichen senkrecht" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der um weniger als 20°, vorzugsweise um weniger als 10° und insbesondere um weniger als 5° von einem Winkel von 90° abweicht. Unter der Wendung, dass eine Gerade und/oder Ebene "zumindest im Wesentlichen parallel" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der um weniger als 10°, vorzugsweise um weniger als 5° und insbesondere um weniger als 3° von einem Winkel von 0 abweicht. Unter "vorgesehen" soll insbesondere speziell ausgelegt und/oder ausgestattet verstanden werden. Durch eine erfindungsgemäße Ausgestaltung kann vorteilhaft die Abdeckeinheit im Falle einer Beschädigung der Abdeckeinheit und/oder der Grundeinheit einfach und schnell von der Grundeinheit gelöst werden, wodurch vorteilhaft eine Flexibilität erhöht werden kann.

Ferner wird erfindungsgemäß vorgeschlagen, dass die Flugzeugsitzträgereinheit von einer Rückenlehnenbrücke gebildet ist. Unter einer "Rückenlehnenbrücke" soll insbesondere eine Einheit verstanden werden, die dazu vorgesehen ist, eine Rückenlehneneinheit zumindest teilweise zu überbrücken. Insbesondere ist die Rückenlehnenbrücke dazu vorgesehen, zumindest zwei, vorzugsweise seitliche, Begrenzungen der Rückenlehneneinheit miteinander zu verbinden. Vorzugsweise ist die Rückenlehnenbrücke als die Trägereinheit ausgebildet. Insbesondere weist die Rückenlehnenbrücke die Trägerlängserstreckung mit einem Betrag auf, der zumindest im Wesentlichen gleich einem Betrag einer Erstreckung der Rückenlehneneinheit in einer zumindest im Wesentlichen parallel zu der Trägerlängserstreckung ausgerichteten Richtung ist. Beispielsweise ist denkbar, dass die Trägerlängserstreckung zumindest im Wesentlichen parallel zu einer Rückenlehneneinheitlängserstreckung ausgerichtet ist. Insbesondere ist die Trägerlängserstreckung zumindest im Wesentlichen parallel zu einer Rückenlehneneinheitquererstreckung ausgerichtet. Vorzugsweise ist ein Betrag der Trägerlängserstreckung zumindest im Wesentlichen gleich einem Betrag der Rückenlehneneinheitquererstreckung. Insbesondere weist die Rückenlehnenbrücke die Trägerquererstreckung auf, die zumindest im Wesentlichen parallel zu der Rückenlehneneinheitlängserstreckung ausgerichtet ist. Vorzugsweise ist ein Betrag der Trägerquererstreckung kleiner als 25 %, vorzugsweise kleiner als 20 % und insbesondere kleiner als 15 % eines Betrags der Rückenlehneneinheitlängserstreckung. Insbesondere ist die Rückenlehnenbrücke in einem oberen Bereich der Rückenlehneneinheit angeordnet. Unter einem "oberen Bereich" der Rückenlehneneinheit soll insbesondere ein Bereich der Rückenlehneneinheit verstanden werden, der in einer aufrechten Stellung der Sitzeinheit, vorzugsweise bei einer zumindest im Wesentlichen senkrecht zu dem Boden ausgerichteten Rückenlehneneinheitlängserstreckung, in einem der Aufständereinheit der Sitzeinheit abgewandten Bereich der Rückenlehneneinheit angeordnet ist. Insbesondere ist der obere Bereich der Rückenlehneneinheit bezüglich einer Rückenlehneneinheitlängsrichtung oberhalb eines Betrags von mehr als 40 %, vorzugsweise von mehr als 50 % und insbesondere von mehr als 55 % der Rückenlehneneinheitlängserstreckung angeordnet. Unter einer "Rückenlehneneinheitlängsrichtung" soll insbesondere eine Richtung verstanden werden, die in der aufrechten Stellung der Sitzeinheit zumindest im Wesentlichen senkrecht zu dem Boden ausgerichtet ist. Insbesondere weist die Rückenlehneneinheitlängsrichtung in der aufrechten Stellung der Sitzeinheit ausgehend von dem Boden in Richtung der Rückenlehneneinheit. Unter "zumindest im Wesentlichen" soll in diesem Zusammenhang insbesondere verstanden werden, dass eine Abweichung von einem vorgegebenen Wert insbesondere weniger als 25 %, vorzugsweise weniger als 10 % und besonders bevorzugt weniger als 5 % des vorgegebenen Werts abweicht. Durch eine erfindungsgemäße Ausgestaltung kann vorteilhaft eine flexibel ausgebildete Rückenlehnenbrücke erreicht werden.

Zudem wird vorgeschlagen, dass die Flugzeugsitzträgereinheit zumindest einen Hohlraum aufweist, der zu einer Lagerung von zumindest einer Zusatzkomponente vorgesehen ist. Unter einem "Hohlraum" soll insbesondere ein Raum verstanden werden, der von zumindest einem Bauteil, insbesondere von der Fahrzeugsitzträgereinheit, begrenzt ist und zwar insbesondere von zumindest drei und vorzugsweise von zumindest vier Seiten. Insbesondere weist der Hohlraum ein Hohlraumvolumen auf, welches durch das Bauteil von den Seiten begrenzt ist. Erfindungsgemäß ist der Hohlraum zu der Lagerung der Zusatzkomponente vorgesehen. Unter einer "Zusatzkomponente" soll insbesondere eine Komponente verstanden werden, die eine über eine von der Sitzeinheit ausgefüllte Funktion hinausgehende Funktion aufweist. Insbesondere ist die Zusatzkomponente dazu vorgesehen, einen Komfort für einen Passagier zu erhöhen. Vorzugsweise ist die Zusatzkomponente als eine elektronische Komponente ausgebildet. Insbesondere ist die Zusatzkomponente als eine mechanische Komponente ausgebildet. Vorzugsweise ist die mechanische Zusatzkomponente als ein Kleiderhaken ausgebildet. Ebenfalls denkbar ist, dass die mechanische Zusatzkomponente als ein Becherhalter ausgebildet ist. Zudem ist denkbar, dass die mechanische Zusatzkomponente als ein Stifthalter ausgebildet ist. Beispielsweise ist denkbar, dass die Zusatzkomponente als eine magnetische Zusatzkomponente ausgebildet ist, die dazu vorgesehen ist, mittels einer magnetischen Haltekraft zumindest einen Gegenstand in zumindest einer Position zu halten. Insbesondere ist die als elektronische Komponente ausgebildete Zusatzkomponente als ein USB-Anschluss, als ein LAN-Anschluss, als ein Audio-Anschluss und/oder als ein elektrischer Anschluss zu einem Anschließen eines elektrischen Geräts, beispielsweise eines Laptops, ausgebildet. Durch eine erfindungsgemäße Ausgestaltung kann vorteilhaft in der Flugzeugsitzträgereinheit eine Vielzahl verschiedener Zusatzkomponenten gelagert werden, wodurch flexibel auf entsprechende Bedürfnisse eingegangen werden kann. Zudem kann vorteilhaft ein modularer Einbau von elektrischen Kleinstkomponenten realisiert werden. Ferner kann vorteilhaft eine Funktionszusammenführung von verschiedenen Features realisiert und damit eine Teilevielfalt reduziert werden.

Ferner wird vorgeschlagen, dass die Flugzeugsitzträgereinheit in einem montierten Zustand zumindest eine Lagereinheit zu einer Lagerung zumindest eines persönlichen Gegenstands aufweist. Insbesondere weist die Flugzeugsitzträgereinheit in einem montierten Zustand zumindest eine Ablagefläche für den persönlichen Gegenstand auf. Vorteilhaft ist die Lagereinheit als die Ablagefläche ausgebildet. Insbesondere ist die Lagereinheit, insbesondere die Ablagefläche, in einem montierten Zustand in einem Kontaktbereich der Grundeinheit und der Abdeckeinheit angeordnet. Vorteilhaft ist die Lagereinheit in einem montierten Zustand als eine Nut in dem Kontaktbereich der Grundeinheit und der Abdeckeinheit ausgebildet. Vorzugsweise ist der persönliche Gegenstand als ein Tablet-Computer ausgebildet. Vorteilhaft umfasst die Rückenlehneneinheit zumindest ein Befestigungselement zu einer Befestigung des persönlichen Gegenstands. Vorteilhaft sind die Lagereinheit und das Befestigungselement in zumindest einem befestigten Zustand des persönlichen Gegenstands dazu vorgesehen, zu der Lagerung des persönlichen Gegenstands zusammenzuwirken. Vorteilhaft ist das Befestigungselement als ein Band, vorteilhaft als ein Gummiband, ausgebildet. Alternativ ist denkbar, dass das Befestigungselement als eine Schnur ausgebildet ist. Zudem könnte das Befestigungselement als ein Halteelement und/oder ein Exzenterelement ausgebildet sein, wobei das Befestigungselement mittels eines Drehgelenks an der Rückenlehneneinheit angebracht sein könnte. Zudem sind weitere, einem Fachmann als sinnvoll erscheinende Befestigungselemente denkbar. Durch die Lagereinheit der Flugzeugsitzträgereinheit kann vorteilhaft ein persönlicher Gegenstand komfortabel, sicher und einfach an der Sitzeinheit angeordnet werden. Weiterhin wird vorgeschlagen, dass der Hohlraum zumindest im Wesentlichen von der Grundeinheit und der Abdeckeinheit gebildet ist. Unter der Wendung, dass der Hohlraum "zumindest im Wesentlichen von der Grundeinheit und der Abdeckeinheit gebildet" ist, soll insbesondere verstanden werden, dass eine und/oder mehrere, vorzugsweise seitliche, Begrenzungsflächen des Hohlraums zu mehr als 80 %, vorzugsweise zu mehr als 90 % und insbesondere zu mehr als 95 % eines Betrags der Begrenzungsflächen von der Grundeinheit und der Abdeckeinheit gebildet ist. Durch eine erfindungsgemäße Ausgestaltung kann vorteilhaft aufgrund der Ausgestaltung der Flugzeugsitzträgereinheit mit der Grundeinheit, vorzugsweise lösbar, verbundenen Abdeckeinheit ein jederzeit zugänglicher Hohlraum erreicht werden. Zudem können die Zusatzkomponenten flexibel je nach Bedürfnissen ausgetauscht werden.

Ferner wird vorgeschlagen, dass die Abdeckeinheit zumindest eine Aufnahmeeinheit aufweist, die dazu vorgesehen ist, die Zusatzkomponente aufzunehmen. Unter einer "Aufnahmeeinheit" soll insbesondere eine Einheit verstanden werden, die dazu vorgesehen ist, die Zusatzkomponente in der Abdeckeinheit zu lagern. Insbesondere ist die Aufnahmeeinheit als eine Ausnehmung in der Abdeckeinheit ausgebildet. Vorzugsweise weist die Aufnahmeeinheit eine der Zusatzkomponente entsprechende Geometrie auf. Insbesondere ist die Aufnahmeeinheit dazu vorgesehen, die Zusatzkomponente bündig mit einer Abdeckeinheitenoberfläche aufzunehmen. Vorzugsweise ist eine Zusatzkomponentenoberfläche der Zusatzkomponente nach Aufnahme in der Aufnahmeeinheit zumindest im Wesentlichen in einer von der Abdeckeinheitenoberfläche aufgespannten Ebene angeordnet. Unter der Wendung, dass die Zusatzkomponentenoberfläche der Zusatzkomponente nach Aufnahme in der Aufnahmeeinheit "zumindest im Wesentlichen in einer von der Abdeckeinheitenoberfläche aufgespannten Ebene angeordnet" ist, soll insbesondere verstanden werden, dass die Zusatzkomponentenoberfläche zu mehr als 80 %, vorzugsweise zu mehr als 90 % und insbesondere zu mehr als 95 % eines Betrags der Zusatzkomponentenoberfläche in der von der Abdeckeinheitenoberfläche aufgespannten Ebene angeordnet ist. Durch eine erfindungsgemäße Ausgestaltung kann vorteilhaft die Zusatzeinheit sicher in der Aufnahmeeinheit der Abdeckeinheit aufgenommen werden. Zudem kann durch eine Vielzahl verschiedener Zusatzkomponenten eine Flexibilität erhöht werden. Ferner kann eine Anzahl an Aufnahmeeinheiten in einer einzigen Abdeckeinheit flexibel an jeweilige Bedürfnisse angepasst werden.

Zudem wird vorgeschlagen, dass die Flugzeugsitzträgereinheit zumindest eine Versorgungszugangseinheit aufweist, die dazu vorgesehen ist, zumindest eine elektrische Zusatzkomponente zu versorgen. Unter einer "Versorgungszugangseinheit" soll insbesondere eine Einheit verstanden werden, die zumindest eine Anschlussstelle für einen elektrischen Strom aufweist. Insbesondere ist die Flugzeugsitzträgereinheit dazu vorgesehen, über die Anschlussstelle der Versorgungszugangseinheit den elektrischen Strom zu empfangen. Insbesondere weist die Versorgungszugangseinheit zumindest ein Leitungselement auf, das dazu vorgesehen ist, den elektrischen Strom zu leiten. Vorzugsweise ist das Leitungselement als ein Stromkabel ausgebildet. Alternativ ist denkbar, dass die Versorgungszugangseinheit zumindest eine Solarzelle aufweist, die dazu vorgesehen ist, durch Umgebungslicht, insbesondere durch eine Raumbeleuchtung, elektrische Energie, insbesondere elektrischen Strom, zu gewinnen. Insbesondere ist die die Solarzelle aufweisende Versorgungszugangseinheit dazu vorgesehen, die elektrische Zusatzkomponente, insbesondere mit elektrischem Strom, zu versorgen. Durch eine erfindungsgemäße Ausgestaltung kann vorteilhaft die Flugzeugsitzträgereinheit zumindest eine elektrische Komponente versorgen, wodurch ein Angebot an Zusatzkomponenten erhöht werden kann.

Weiterhin wird vorgeschlagen, dass die Flugzeugsitzträgereinheit zumindest eine Verriegelungseinheit aufweist, die dazu vorgesehen ist, zumindest einen Gegenstand in einer Verstaustellung zu verriegeln. Insbesondere ist der Gegenstand als ein Tisch ausgebildet. Alternativ oder zusätzlich ist denkbar, dass der Gegenstand als eine Sitzbildschirmeinheit und/oder eine Lampe, insbesondere eine Leselampe, ausgebildet ist. Insbesondere ist der Gegenstand schwenkbar an zumindest einem Flugzeugsitzbauteil, insbesondere an der Rückenlehneneinheit, gelagert. Unter einer "Verriegelungseinheit" soll insbesondere eine Einheit verstanden werden, die dazu vorgesehen ist, den Gegenstand in zumindest einer Verstaustellung zu verriegeln. Insbesondere ist die Verriegelungseinheit dazu vorgesehen, den Gegenstand bis zu einem aktiven Zutun, insbesondere bis zu einem aktiven Zutun eines Passagiers, in der Verstaustellung zu verriegeln. Vorzugsweise ist die Verriegelungseinheit dazu vorgesehen, den Gegenstand so lange in der Verstaustellung zu verriegeln, bis die Verriegelungseinheit durch das aktive Zutun betätigt wird. Insbesondere ist die Verriegelungseinheit dazu vorgesehen, den Gegenstand unabhängig von weiteren äußeren Einflüssen, insbesondere von Erschütterungen und/oder weiteren äußeren Kräften, in der Verstaustellung zu verriegeln. Unter "weiteren äußeren Einflüssen" sollen insbesondere Einflüsse verstanden werden, die über das aktive Zutun hinausgehen, wie beispielsweise Erschütterungen und/oder weitere äußere Kräfte, wie Beschleunigungen, Abbremsungen und/oder variierende Ausrichtungen des Gegenstands sowie der Verriegelungseinheit in einem Raum, insbesondere in einer Flugzeugkabine. Unter einem "aktiven Zutun" soll insbesondere eine aktiv, vorzugsweise von einem Passagier, vorgenommene Handlung, verstanden werden. Insbesondere ist das aktive Zutun als eine Rotationsbewegung ausgebildet. Vorzugsweise ist das aktive Zutun als eine Zugbewegung und/oder eine Druckbewegung ausgebildet. Durch eine erfindungsgemäße Ausgestaltung kann vorteilhaft die Flugzeugsitzträgereinheit zusätzlich zu ihrer Aufgabe als Trägereinheit eine Funktion der Verriegelungseinheit übernehmen, wodurch eine flexibel ausgebildete Flugzeugsitzträgereinheit erreicht werden kann.

Ferner wird vorgeschlagen, dass die Flugzeugsitzträgervorrichtung zumindest einen an der Grundeinheit angeordneten vertikalen Wandstreifen aufweist, der dazu vorgesehen ist, einen Verstauraum zumindest teilweise zu begrenzen. Unter einem "vertikalen Wandstreifen" soll insbesondere ein Wandstreifen verstanden werden, der dazu vorgesehen ist, in dem montierten Zustand zumindest eine, vorzugsweise seitliche, Begrenzungsfläche des Verstauraums auszubilden. Insbesondere weist der vertikale Wandstreifen zumindest eine Wandstreifenlängsrichtung auf, die zumindest im Wesentlichen parallel zu der Trägerquerrichtung ausgerichtet ist. Insbesondere ist die Wandstreifenlängsrichtung zumindest im Wesentlichen senkrecht zu der Trägerlängsrichtung ausgerichtet. Vorzugsweise weist der vertikale Wandstreifen zumindest eine Wandstreifenquerrichtung auf, die einen Betrag von weniger als 40 %, vorzugsweise von weniger als 30 % und insbesondere von weniger als 25 % eines Betrags der Wandstreifenlängsrichtung aufweist. Unter der Wendung, dass der vertikale Wandstreifen dazu vorgesehen ist, den Verstauraum "zumindest teilweise" zu begrenzen, soll insbesondere verstanden werden, dass der vertikale Wandstreifen zumindest eine, vorzugsweise seitliche, Begrenzungsfläche des Verstauraums ausbildet. Unter einem "Verstauraum" soll insbesondere ein Raum verstanden werden, der von zumindest einem Bauteil begrenzt ist und zwar insbesondere von zumindest zwei und vorzugsweise von zumindest drei Seiten. Insbesondere weist der Verstauraum ein Verstauraumvolumen auf, welches durch das Bauteil von den Seiten begrenzt ist. Vorzugsweise ist der Verstauraum über zumindest eine, vorzugsweise in der aufrechten Stellung der Sitzeinheit von dem Boden abgewandte, Öffnung zugänglich. Insbesondere ist der Verstauraum als ein Verstauraum für Reiseutensilien, insbesondere für Druckerzeugnisse und/oder Zeitschriften, ausgebildet. Vorzugsweise umfasst der Verstauraum eine hohe Literaturtasche. Durch eine erfindungsgemäße Ausgestaltung kann vorteilhaft ein weiteres, zusätzliches Bauteil zu einer Ausbildung des Verstauraums eingespart werden, wodurch vorteilhaft Material und Kosten reduziert und eine flexible Flugzeugsitzträgereinheit erreicht werden können.

Zudem wird vorgeschlagen, dass die Flugzeugsitzträgereinheit zumindest eine Einstelleinheit umfasst, die dazu vorgesehen ist, zumindest eine variable Abmessung zu erzielen. Unter einer "Einstelleinheit" soll insbesondere eine Einheit verstanden werden, die dazu vorgesehen ist, zumindest eine Abmessung der Flugzeugsitzträgereinheit einzustellen, insbesondere zu verändern. Unter einer "variablen Abmessung" soll insbesondere eine Abmessung verstanden werden, die durch zumindest eine Einheit, insbesondere durch die Einstelleinheit, insbesondere gezielt, veränderbar ist. Insbesondere ist die variable Abmessung zumindest im Wesentlichen parallel zu der Trägertiefenrichtung ausgerichtet. Ebenfalls denkbar ist, dass die variable Abmessung zumindest im Wesentlichen parallel zu der Trägerlängsrichtung ausgerichtet ist. Beispielsweise ist die Flugzeugsitzträgereinheit teleskopartig ausgebildet. Ebenfalls denkbar ist, dass die Flugzeugsitzträgereinheit zumindest einen Trägeradapter aufweist, der dazu vorgesehen ist, an die Flugzeugsitzträgereinheit angebracht zu werden und eine Abmessung der Flugzeugsitzträgereinheit, vorzugsweise in der Trägerlängsrichtung, insbesondere in der Trägertiefenrichtung, zu verändern. Durch eine erfindungsgemäße Ausgestaltung kann vorteilhaft eine flexible, aufgrund jeweiliger Bedürfnisse einstellbare Abmessung der Flugzeugsitzträgereinheit erreicht werden.

Weiterhin wird vorgeschlagen, dass die Flugzeugsitzträgereinheit zumindest teilweise in einem Gussverfahren hergestellt ist. Insbesondere ist die Flugzeugsitzträgereinheit zumindest teilweise in einem Druckgussverfahren hergestellt. Vorzugsweise ist die Flugzeugsitzträgereinheit zumindest teilweise in einem Spritzgussverfahren hergestellt. Unter der Wendung, dass die Flugzeugsitzträgereinheit "zumindest teilweise in einem Gussverfahren hergestellt" ist, soll insbesondere verstanden werden, dass zumindest ein Verfahrensschritt zu einer Herstellung der Flugzeugsitzträgereinheit als ein Gussverfahren ausgebildet ist. Durch eine erfindungsgemäße Ausgestaltung kann vorteilhaft eine Form der Flugzeugsitzträgereinheit flexibel an jeweilige Bedürfnisse angepasst gegossen werden. Zudem können vorteilhaft unterschiedliche Gussverfahren verwendet und damit eine Flexibilität weiter erhöht werden.

Ferner wird vorgeschlagen, dass die Flugzeugsitzträgereinheit zumindest eine weitere Abdeckeinheit aufweist, die sich von der einen Abdeckeinheit in zumindest einem Merkmal unterscheidet. Durch eine erfindungsgemäße Ausgestaltung können vorteilhaft mehrere, sich in wenigstens einem Merkmal unterscheidende Abdeckeinheiten bereitgestellt werden, wodurch vorteilhaft eine jeweils an entsprechende Bedürfnisse angepasste Abdeckeinheit verwendet werden kann.

Zudem wird ein Flugzeugsitz mit zumindest einer Sitzeinheit und mit zumindest einer erfindungsgemäßen Flugzeugsitzträgervorrichtung vorgeschlagen. Durch eine erfindungsgemäße Ausgestaltung kann vorteilhaft ein Flugzeugsitz mit der erfindungsgemäßen Flugzeugsitzträgervorrichtung ausgestattet werden, wodurch ein flexibler Flugzeugsitz erreicht werden kann.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche, die den Schutzbereich der Erfindung bestimmen, enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Ausschnitt eines erfindungsgemäßen Flugzeugsitzes in einer Rückansicht,
- Fig. 2: eine erfindungsgemäße Flugzeugsitzträgervorrichtung in einer perspektivischen Darstellung,
- Fig. 3: einen Ausschnitt einer Abdeckeinheit der erfindungsgemäßen Flugzeugsitzträgervorrichtung aus Fig. 2 in einer Rückansicht und
- Fig. 4: den Flugzeugsitz aus Fig. 1 mit einem an dem Flugzeugsitz befestigten persönlichen Gegenstand.

### Beschreibung des Ausführungsbeispiels

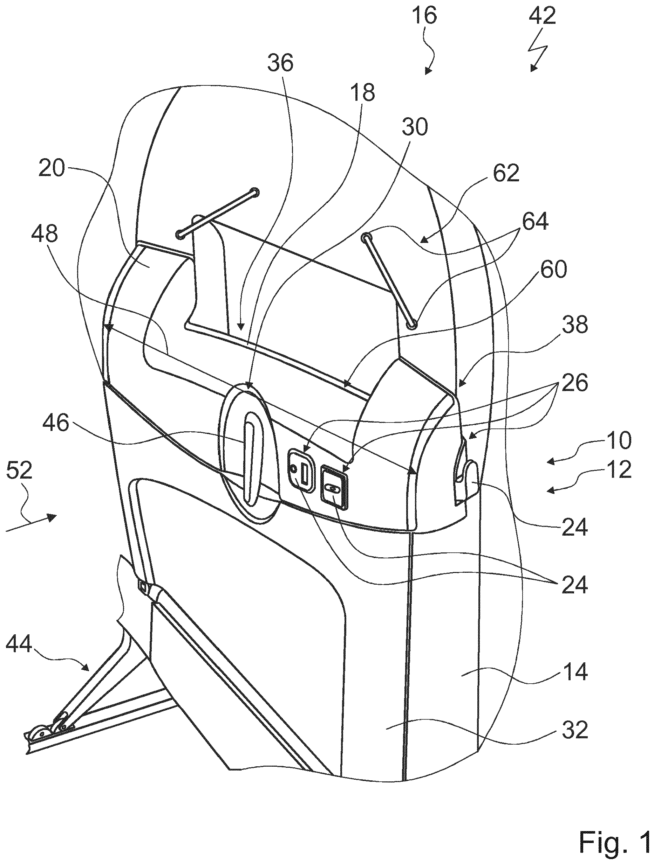

Fig. 1 zeigt einen Ausschnitt eines erfindungsgemäßen Flugzeugsitzes 42 mit einer Sitzeinheit 16 und mit einer erfindungsgemäßen Flugzeugsitzträgervorrichtung 10 in einer Rückansicht in einem montierten Zustand. Die Sitzeinheit 16 weist eine Rückenlehneneinheit 14 auf. Zudem weist die Sitzeinheit 16 eine Aufständereinheit 44 auf, die dazu vorgesehen ist, die Sitzeinheit 16 auf einem Flugzeugboden (nicht dargestellt) aufzuständern. Weiterhin weist die Sitzeinheit 16 eine Sitzbodeneinheit (nicht dargestellt) auf, die als eine Sitzfläche für einen Passagier (nicht dargestellt) ausgebildet ist. Die Rückenlehneneinheit 14 ist schwenkbar an der Sitzbodeneinheit gelagert. Denkbar ist ebenfalls, dass die Sitzeinheit 16 eine Armlehneneinheit (nicht dargestellt) aufweist.

Ausgestattet ist die Flugzeugsitzträgervorrichtung 10 mit einer Flugzeugsitzträgereinheit 12, die dazu vorgesehen ist, in dem montierten Zustand an der Rückenlehneneinheit 14 der Sitzeinheit 16 angeordnet zu sein. Die Sitzeinheit 16 weist einen Gegenstand 32 auf, der schwenkbar an der Rückenlehneneinheit 14 der Sitzeinheit 16 gelagert ist. Der Gegenstand 32 ist als ein Tisch ausgebildet. In Fig. 1 ist der Gegenstand 32 in einer Verstaustellung angeordnet. Die Flugzeugsitzträgereinheit 12 weist eine Verriegelungseinheit 30 auf, die dazu vorgesehen ist, den Gegenstand 32 in der Verstaustellung zu verriegeln. Die Verriegelungseinheit 30 weist ein Verriegelungselement 46 auf, das schwenkbar an der Flugzeugsitzträgereinheit 12 gelagert ist. Das Verriegelungselement 46 ist als ein Knebel ausgebildet. Alternativ sind weitere, einem Fachmann als sinnvoll erscheinende Ausbildungen des Verriegelungselements denkbar. Zudem sind alternativ zu der Verriegelungseinheit 30 weitere, einem Fachmann als sinnvoll erscheinende Ausbildungen an Verriegelungseinheiten denkbar.

Im vorliegenden Ausführungsbeispiel ist die Flugzeugsitzträgereinheit 12 von einer Rückenlehnenbrücke gebildet. Die Flugzeugsitzträgereinheit 12 weist eine Trägerlängserstreckung 48 auf, die im Wesentlichen parallel zu einer von der Rückenlehneneinheit 14 aufgespannten Ebene ausgerichtet ist. Zudem ist die Trägerlängserstreckung 48 im Wesentlichen parallel zu der Sitzbodeneinheit ausgerichtet. Die Flugzeugsitzträgereinheit 12 ist in dem montierten Zustand fest mit der Rückenlehneneinheit 14 verbunden. Gemäß einer Weiterbildung der Erfindung ist die Flugzeugsitzträgereinheit 12 teilweise in einem Gussverfahren hergestellt. Im vorliegenden Ausführungsbeispiel ist die Flugzeugsitzträgereinheit 12 in einem Spritzgussverfahren hergestellt. Alternativ ist denkbar, dass die Flugzeugsitzträgereinheit 12 in einem Druckgussverfahren hergestellt ist.

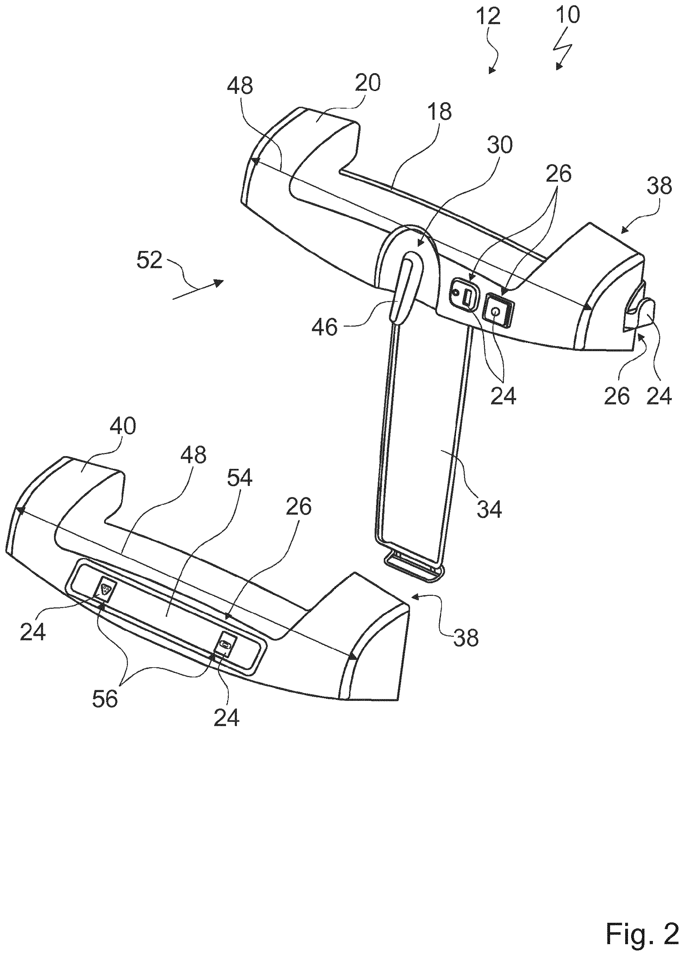

Fig. 2 zeigt die erfindungsgemäße Flugzeugsitzträgervorrichtung 10 in einer perspektivischen Darstellung. Die Flugzeugsitzträgereinheit 12 weist eine Grundeinheit 18 und eine von der Grundeinheit 18 getrennt ausgebildete Abdeckeinheit 20 auf, die dazu vorgesehen ist, in dem montierten Zustand mit der Grundeinheit 18 verbunden zu sein. In Fig. 1 und 2 ist die Grundeinheit 18 nur ausschnittsweise dargestellt, da die Grundeinheit 18 in dem montierten Zustand von der Abdeckeinheit 20 größtenteils verdeckt ist. Gemäß einer Weiterbildung der Erfindung ist die Flugzeugsitzträgereinheit 12 ausgestattet mit mehreren Zusatzkomponenten 24. Eine der Zusatzkomponenten 24 ist als ein Kleiderhaken ausgebildet. Die restlichen Zusatzkomponenten 24 sind im gezeigten Ausführungsbeispiel als elektrische Komponenten ausgebildet.

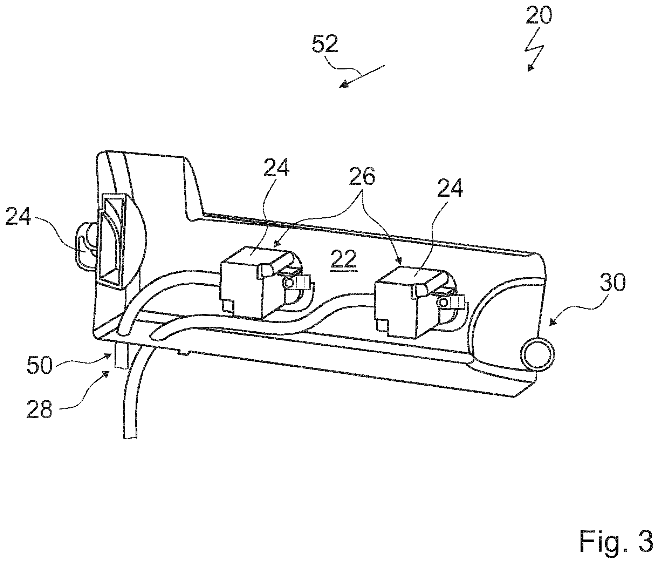

Die Flugzeugsitzträgereinheit 12 weist einen Hohlraum 22 auf, der zu einer Lagerung von den Zusatzkomponenten 24 vorgesehen ist (vgl. Fig. 3). Der Hohlraum 22 ist im Wesentlichen von der Grundeinheit 18 und der Abdeckeinheit 20 gebildet. In dem montierten Zustand ist ein Großteil der Zusatzkomponenten 24 in dem Hohlraum 22 gelagert. Jedoch ist in dem montierten Zustand jeweils ein Teilbereich der Zusatzkomponenten 24 von einem Raum außerhalb der Flugzeugsitzträgereinheit 12 zugänglich. Und zwar ist der jeweilige Teilbereich von dem Raum außerhalb der Flugzeugsitzträgereinheit 12 aus verwendbar.
Der jeweilige Teilbereich der Zusatzkomponenten 24 ist von dem Passagier anfassbar gelagert. Die Abdeckeinheit 20 weist jeweils eine Aufnahmeeinheit 26 auf, die dazu vorgesehen ist, die jeweilige Zusatzkomponente 24 aufzunehmen. Eine Anzahl an Aufnahmeeinheiten 26 der Abdeckeinheit 20 ist gleich einer Anzahl an Zusatzkomponenten 24. Eine jeweilige Komponentenoberfläche der Zusatzkomponenten 24 ist in dem montierten Zustand bündig mit einer Abdeckoberfläche der Abdeckeinheit 20 angeordnet.

Fig. 3 zeigt einen Ausschnitt der Abdeckeinheit 20 aus Fig. 2 in einer Rückansicht. Ebenfalls zu erkennen ist, dass die Flugzeugsitzträgereinheit 12 jeweils eine Versorgungszugangseinheit 28 aufweist, die dazu vorgesehen ist, die jeweilige elektrische Zusatzkomponente 24 zu versorgen. Im Folgenden wird lediglich eine der Versorgungszugangseinheiten 28 beschrieben, da alle Versorgungszugangseinheiten 28 identisch ausgebildet sind. Die Versorgungszugangseinheit 28 ist als ein Stromkabel ausgebildet. Die Versorgungszugangseinheit 28 weist eine Anschlussstelle 50 auf, über welche die Versorgungszugangseinheit 28 an eine Stromleitung (nicht dargestellt) angeschlossen ist. Eine Verbindung der Versorgungszugangseinheit 28 an die Stromleitung ist bei einem Lösen der Abdeckeinheit 20 von der Grundeinheit 18 lösbar. Bei erneuter Verbindung der Abdeckeinheit 20 und der Grundeinheit 18 ist die Versorgungszugangseinheit 28 mit der Stromleitung verbindbar. Die Stromleitung verläuft von der Flugzeugsitzträgereinheit 12 ausgehend durch einen Leitungskanal (nicht dargestellt), welcher durch die Rückenlehneneinheit 14, die Sitzbodeneinheit und die Aufständereinheit 44 in den Fahrzeugboden führt.

Die Sitzeinheit 16 weist einen Verstauraum 36 auf, der teilweise von der Flugzeugsitzträgereinheit 12 ausgebildet ist (vgl. Fig. 1). Zusätzlich hierzu ist der Verstauraum 36 teilweise von der Rückenlehneneinheit 14 ausgebildet. Der Verstauraum 36 ist zu einer Aufnahme von Reiseutensilien (nicht dargestellt), wie beispielsweise von Druckutensilien und/oder Zeitschriften, vorgesehen. Angeordnet ist der Verstauraum 36 zwischen Rückenlehneneinheit 14 und der Flugzeugsitzträgervorrichtung 10. Die Flugzeugsitzträgervorrichtung 10 umfasst einen an der Grundeinheit 18 angeordneten vertikalen Wandstreifen 34, der dazu vorgesehen ist, den Verstauraum 36 teilweise zu begrenzen (vgl. Fig. 2). Die Rückenlehneneinheit 14 bildet eine Wandung des Verstauraums 36 aus. Eine weitere Wandung des Verstauraums 36 bilden die Flugzeugsitzträgereinheit 12 und der vertikale Wandstreifen 34 gemeinsam aus.

Die Flugzeugsitzträgereinheit 12 umfasst eine Einstelleinheit 38, die dazu vorgesehen ist, eine variable Abmessung zu erzielen. Die Flugzeugsitzträgereinheit 12 weist einen Trägeradapter (nicht dargestellt) auf, der dazu vorgesehen ist, an die Flugzeugsitzträgereinheit 12 angebracht zu werden und die Abmessung der Flugzeugsitzträgereinheit 12 zu verändern. Die Einstelleinheit 38 ist dazu vorgesehen, die variable Abmessung in einer Trägertiefenrichtung 52 zu erzielen. Die Trägertiefenrichtung 52 ist in dem montierten Zustand ausgehend von der Flugzeugsitzträgereinheit 12 und im Wesentlichen senkrecht zu der Grundeinheit 18 in Richtung der Rückenlehneneinheit 14 ausgerichtet. Ebenfalls denkbar ist, dass die Einstelleinheit 38 dazu vorgesehen ist, die variable Abmessung in einer im Wesentlichen parallel zu der Trägerlängserstreckung 48 ausgerichteten Trägerlängsrichtung zu erzielen. Denkbar ist beispielsweise eine teleskopartige Ausbildung der Flugzeugsitzträgereinheit 12.

Fig. 2 zeigt ferner, dass die Flugzeugsitzträgereinheit 12 eine weitere Abdeckeinheit 40 aufweist, die sich von der einen Abdeckeinheit 20 in mehreren Merkmalen unterscheidet. Die weitere Abdeckeinheit 40 weist eine einzige Aufnahmeeinheit 26 auf, die dazu vorgesehen ist, eine Abdeckplatte 54 aufzunehmen. Die Abdeckplatte 54 weist mehrere Abdeckplattenaufnahmen 56 auf, die jeweils zu einer Aufnahme von jeweils einer Zusatzkomponente 24 vorgesehen sind. Alternativ ist denkbar, dass die weitere Abdeckeinheit 40 mehrere Aufnahmeeinheiten 26 aufweist, die jeweils dazu vorgesehen sind, jeweils eine Abdeckplatte 54 aufzunehmen. Dabei weist jede der Abdeckplatten 54 jeweils eine Abdeckplattenaufnahme 56 auf, die zu einer Aufnahme von jeweils einer Zusatzkomponente 24 vorgesehen ist.

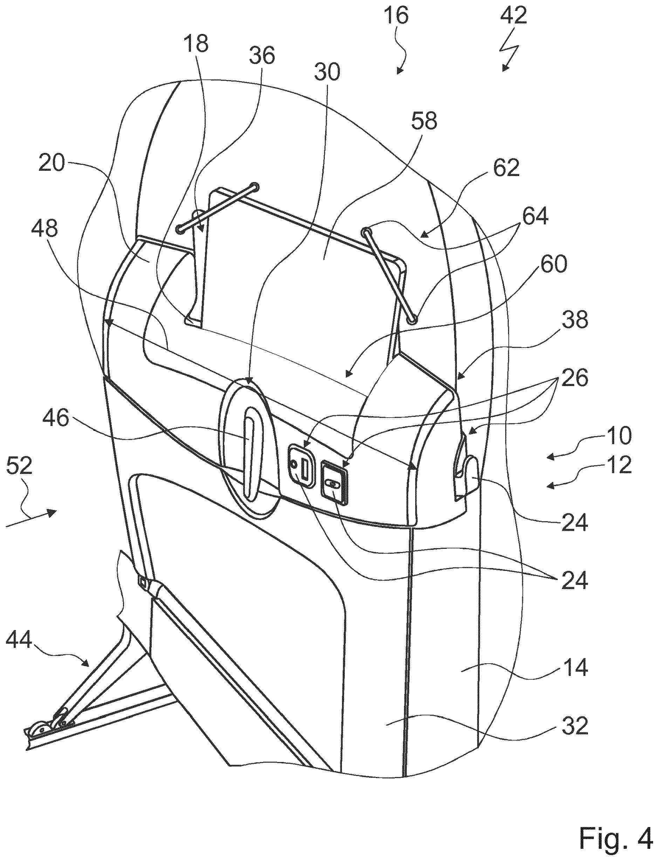

Fig. 4 zeigt den Flugzeugsitz 42 aus Fig. 1 mit einem an dem Flugzeugsitz 42 befestigten persönlichen Gegenstand 58. Der persönliche Gegenstand 58 ist als ein Tablet-Computer ausgebildet. Die Flugzeugsitzträgereinheit 12 weist in dem montierten Zustand eine Lagereinheit 60 zu einer Lagerung des persönlichen Gegenstands 58 auf. Die Lagereinheit 60 ist in dem montierten Zustand in einem Kontaktbereich der Grundeinheit 18 und der Abdeckeinheit 20 angeordnet und als eine Ablagefläche ausgebildet. Hierbei ist die Lagereinheit 60 als eine Nut in dem Kontaktbereich der Grundeinheit 18 und der Abdeckeinheit 20 ausgebildet. Die Rückenlehneneinheit 14 weist zwei Befestigungselemente 62 zu einer Befestigung des persönlichen Gegenstands 58 auf. Von den beiden Befestigungselementen 62 wird im Folgenden lediglich eines beschrieben und mit einem Bezugszeichen versehen. Das Befestigungselement 62 ist als ein Gummiband ausgebildet. Das Befestigungselement 62 ist mittels zweier Befestigungsmittel 64 an der Rückenlehneneinheit 14 befestigt. Das Befestigungselement 62 ist in dem an der Rückenlehneneinheit 14 montierten Zustand in einem gespannten Zustand angeordnet.

Alternativ zu einer Ausbildung der Lagereinheit 60 als Nut ist denkbar, dass die Lagereinheit 60 als ein Absatz zu einem Abstützen des persönlichen Gegenstands 58 ausgebildet ist. Hierbei weist die Lagereinheit 60 in einem von der Rückenlehneneinheit 14 wegweisenden Bereich - in einem Vergleich zu einem der Rückenlehneneinheit 14 zuweisenden Bereich - eine Erhöhung auf, an der der persönliche Gegenstand 58 abgestützt werden kann. Alternativ zu einer Ausbildung des Befestigungselements 62 als ein Gummiband ist denkbar, dass das Befestigungselement 62 als eine Klammer ausgebildet ist, die mittels eines Spannelements an der Rückenlehneneinheit 14 befestigt ist. Das als Klammer ausgebildete Befestigungselement 62 ist dazu vorgesehen, mittels einer Spannkraft des Spannelements den persönlichen Gegenstand 58 zwischen dem Befestigungselement 62 und der Lagereinheit 60 einzuklemmen. Hierbei ist das als Klammer ausgebildete Befestigungselement 62 dazu vorgesehen, mittels einer Spannkraft des Spannelements der Rückenlehneneinheit 14 in Richtung der Lagereinheit 60 zuzustreben.

In einem befestigten Zustand des persönlichen Gegenstands 58 an der Sitzeinheit 16 ist eine erste Seite des persönlichen Gegenstands 58 in der Lagereinheit 60 gelagert. Eine der in der Lagereinheit 60 gelagerten Seite gegenüberliegende zweite Seite des persönlichen Gegenstands 58 ist an der Rückenlehneneinheit 14 gelagert. Hierbei ist das Befestigungselement 62 dazu vorgesehen, eine Ecke der an der Rückenlehneneinheit 14 angelehnten Seite des persönlichen Gegenstands 58 zu übergreifen. Zudem ist das Befestigungselement 62 dazu vorgesehen, den persönlichen Gegenstand 58 in einer durch die Lagereinheit 60 vorgegebenen Stellung zu fixieren. Die Lagereinheit 60 und das Befestigungselement 62 sind dazu vorgesehen, in dem befestigten Zustand des persönlichen Gegenstands 58 an der Sitzeinheit 16 zusammenzuwirken.

### Bezugszeichen

- 10: Flugzeugsitzträgervorrichtung
- 12: Flugzeugsitzträgereinheit
- 14: Rückenlehneneinheit
- 16: Sitzeinheit
- 18: Grundeinheit
- 20: Abdeckeinheit
- 22: Hohlraum
- 24: Zusatzkomponente
- 26: Aufnahmeeinheit
- 28: Versorgungszugangseinheit
- 30: Verriegelungseinheit
- 32: Gegenstand
- 34: Vertikaler Wandstreifen
- 36: Verstauraum
- 38: Einstelleinheit
- 40: Weitere Abdeckeinheit
- 42: Flugzeugsitz
- 44: Aufständereinheit
- 46: Verriegelungselement
- 48: Trägerlängserstreckung
- 50: Anschlussstelle
- 52: Trägertiefenrichtung
- 54: Abdeckplatte
- 56: Abdeckplattenaufnahme
- 58: Persönlicher Gegenstand
- 60: Lagereinheit
- 62: Befestigungselement
- 64: Befestigungsmittel

## Patentansprüche

1. Flugzeugsitzträgervorrichtung mit zumindest einer Flugzeugsitzträgereinheit (12), die dazu vorgesehen ist, in zumindest einem montierten Zustand an zumindest einer Rückenlehneneinheit (14) einer Sitzeinheit (16) angeordnet zu sein,
wobei
die Flugzeugsitzträgereinheit (12) zumindest eine Grundeinheit (18) und zumindest eine von der Grundeinheit (18) getrennt ausgebildete Abdeckeinheit (20) aufweist, die dazu vorgesehen ist, in dem montierten Zustand mit der Grundeinheit (18) verbunden zu sein,
**dadurch gekennzeichnet, dass**
die Flugzeugsitzträgereinheit (12) von einer Rückenlehnenbrücke gebildet ist, d.h., einer Einheit, die dazu vorgesehen ist, die Rückenlehneneinheit (14) zumindest teilweise zu überbrücken, und dass die Flugzeugsitzträgereinheit (12) zumindest einen Hohlraum (22) aufweist, der zumindest im Wesentlichen von der Grundeinheit (18) und der Abdeckeinheit (20) gebildet ist und zu einer Lagerung von zumindest einer Zusatzkomponente (24) vorgesehen ist.

2. Flugzeugsitzträgervorrichtung zumindest nach Anspruch 1, **dadurch gekennzeichnet, dass**
die Abdeckeinheit (20) zumindest eine Aufnahmeeinheit (26) aufweist, die dazu vorgesehen ist, die Zusatzkomponente (24) aufzunehmen.

3. Flugzeugsitzträgervorrichtung nach einem der vorhergehenden Ansprüche, **dadurch gekennzeichnet, dass**
die Flugzeugsitzträgereinheit (12) zumindest eine Versorgungszugangseinheit (28) aufweist, die dazu vorgesehen ist, zumindest eine elektrische Zusatzkomponente (24) zu versorgen.

4. Flugzeugsitzträgervorrichtung nach einem der vorhergehenden Ansprüche, **dadurch gekennzeichnet, dass**
die Flugzeugsitzträgereinheit (12) zumindest eine Verriegelungseinheit (30) aufweist, die dazu vorgesehen ist, zumindest einen Gegenstand (32) in einer Verstaustellung zu verriegeln.

5. Flugzeugsitzträgervorrichtung nach einem der vorhergehenden Ansprüche, **gekennzeichnet durch**
zumindest einen an der Grundeinheit (18) angeordneten vertikalen Wandstreifen (34), der dazu vorgesehen ist, einen Verstauraum (36) zumindest teilweise zu begrenzen.

6. Flugzeugsitzträgervorrichtung nach einem der vorhergehenden Ansprüche, **dadurch gekennzeichnet, dass**
die Flugzeugsitzträgereinheit (12) zumindest eine Einstelleinheit (38) umfasst, die dazu vorgesehen ist, zumindest eine variable Abmessung zu erzielen.

7. Flugzeugsitzträgervorrichtung nach einem der vorhergehenden Ansprüche, **dadurch gekennzeichnet, dass**
die Flugzeugsitzträgereinheit (12) zumindest teilweise in einem Gussverfahren hergestellt ist.

8. Flugzeugsitzträgervorrichtung nach einem der vorhergehenden Ansprüche, **dadurch gekennzeichnet, dass**
die Flugzeugsitzträgereinheit (12) zumindest eine weitere Abdeckeinheit (40) aufweist, die sich von der einen Abdeckeinheit (20) in zumindest einem Merkmal unterscheidet.

9. Flugzeugsitz mit zumindest einer Sitzeinheit (16) und mit zumindest einer Flugzeugsitzträgervorrichtung (10) nach einem der Ansprüche 1 bis 8.

## Claims

1. Aircraft seat support device with at least one aircraft seat support unit (12), which is configured to be arranged, in at least one assembled state, on at least one backrest unit (14) of a seat unit (16),
wherein the aircraft seat support unit (12) comprises at least one base unit (18) and at least one cover unit (20), which is implemented separately from the base unit (18) and is configured to be connected to the base unit (18) in the assembled state,
**characterised in that**
the aircraft seat support unit (12) is embodied by a backrest bridge, i.e. a unit configured to at least partially bridge the backrest unit (14), and that the aircraft seat support unit (12) comprises at least one hollow space (22), which is implemented at least substantially by the base unit (18) and the cover unit (20) and is configured to store at least one additional component (24).

2. Aircraft seat support device at least according to claim 1,
**characterised in that**
the cover unit (20) comprises at least one receiving unit (26), which is configured to receive the additional component (24).

3. Aircraft seat support device according to one of the preceding claims,
**characterised in that**
the aircraft seat support unit (12) comprises at least one supply access unit (28), which is configured to supply at least one electrical additional component (24).

4. Aircraft seat support device according to one of the preceding claims,
**characterised in that**
the aircraft seat support unit (12) comprises at least one locking unit (30), which is configured to lock at least one object (32) in a stowage position.

5. Aircraft seat support device according to one of the preceding claims,
**characterised by**
at least one vertical wall stripe (34), which is arranged on the base unit (18) and is configured to at least partially delimit a stowage space (36).

6. Aircraft seat support device according to one of the preceding claims,
**characterised in that**
the aircraft seat support unit (12) comprises at least one adjusting unit (38), which is configured to achieve at least one variable dimension.

7. Aircraft seat support device according to one of the preceding claims,
**characterised in that**
the aircraft seat support unit (12) is made at least partly in a cast process.

8. Aircraft seat support device according to one of the preceding claims,
**characterised in that**
the aircraft seat support unit (12) comprises at least one further cover unit (40), which differs from the one cover unit (20) in at least one feature.

9. Aircraft seat with at least one seat unit (16) and with at least one aircraft seat support device (10) according to one of claims 1 to 8.

## Revendications

1. Dispositif de support de siège d'avion avec au moins une unité de support de siège d'avion (12), laquelle est prévue, en au moins un état assemblé, à être disposé à au moins une unité dossier (14) d'une unité de siège (16), l'unité de support de siège d'avion (12) comprenant au moins une unité de base (18) et au moins une unité à couverture (20) implémentée séparément de l'unité de base (18) et prévue à être raccordée avec l'unité de base (18) en état assemblé,
**caractérisé en ce que**
l'unité de support de siège d'avion (12) est implémentée par un pont de dossier, ça veut dire une unité prévue à ponter l'unité dossier (14) au moins partiellement, et que l'unité de support de siège d'avion (12) comporte au moins un espace creux (22), lequel est réalisé au moins sensiblement par l'unité de base (18) et l'unité à couverture (20) et est prévu pour supporter au moins un composant additionnel (24).

2. Dispositif de support de siège d'avion au moins selon la revendication 1,
**caractérisé en ce que**
l'unité à couverture (20) comporte au moins une unité recevant (26) prévue à recevoir le composant additionnel (24).

3. Dispositif de support de siège d'avion selon l'une quelconque des revendications précédentes,
**caractérisé en ce que**
l'unité de support de siège d'avion (12) comporte au moins une unité d'accès d'alimentation (28), laquelle est prévue à alimenter au moins un composant additionnel (24) électrique.

4. Dispositif de support de siège d'avion selon l'une quelconque des revendications précédentes,
**caractérisé en ce que**
l'unité de support de siège d'avion (12) comporte au moins une unité de verrouillage (30), laquelle est prévue à verrouiller au moins un objet (32) dans une position de rangement.

5. Dispositif de support de siège d'avion selon l'une quelconque des revendications précédentes,
**caractérisé par**
au moins une bande de paroi verticale (34), laquelle est disposée à l'unité de base (18) et prévue à au moins partiellement délimiter un espace de rangement (36).

6. Dispositif de support de siège d'avion selon l'une quelconque des revendications précédentes,
**caractérisé en ce que**
l'unité de support de siège d'avion (12) comporte au moins une unité d'ajustement (38) prévue à atteindre au moins une dimension variable.

7. Dispositif de support de siège d'avion selon l'une quelconque des revendications précédentes,
**caractérisé en ce que**
l'unité de support de siège d'avion (12) est produit au moins partiellement dans un procédé de moulage.

8. Dispositif de support de siège d'avion selon l'une quelconque des revendications précédentes,
**caractérisé en ce que**
l'unité de support de siège d'avion (12) comporte au moins une unité à couverture de plus (40) différente de l'unité à couverture (20) par au moins un caractéristique.

9. Siège d'avion avec au moins une unité de siège (16) et avec au moins un dispositif de support de siège d'avion (10) selon l'une quelconque des revendications 1 à 8.
